# EUROPEAN PATENT APPLICATION

(11) **EP 4 779 507 A1**
(43) Date of publication of application: **22.07.2026**
(21) Application number: 25382026.0
(22) Date of filing: 17.01.2025
(51) Int. Cl.: G06F 30/20, B33Y 50/00, G06F 30/23

(54) **DISCRETIZED YIELD SURFACES FOR PLASTIC FLOWS**

(71) Applicant: Ansys, Inc., Canonsburg, PA 15317 (US)
(72) Inventor: HERNANDEZ BECERRO, Pablo, Canonsburg, 15317 (US); ZHU, Xinhai, Canonsburg, 15317 (US)
(74) Representative: Paustian & Partner Patentanwälte mbB

(57) **Abstract**

A computer-implemented method includes obtaining a model representing a physical object, accessing a discretized yield surface having a plurality of data points representing a yield surface of one or more materials of the physical object, each data point corresponding to a point in a stress space and associated with a yield surface normal vector precomputed for the discretized yield surface, and calculating a stress at an integration point of the model to simulate the physical object under a load. The method further includes identifying one of the plurality of data points of the discretized yield surface that corresponds to the stress calculated in the stress space, determining plastic deformation is occurring based on the stress calculated and the one data point identified, and adjusting the stress according to a normal vector associated with the one data point identified to simulate plastic deformation of the physical object under the load

## Description

### FIELD OF THE DISCLOSURE

The present disclosure relates generally to determining plastic flows during deformation and, more particularly, to methods and systems for constructing and utilizing yield surfaces within plasticity models.

### BACKGROUND OF THE DISCLOSURE

Plasticity models are commonly generated for use in the determination of elastic vs. plastic deformation in finite element modeling (FEM) of a deformed material. These plasticity models define the elastic limit of the material through the use of a yield surface, which can exist within the stress space as a function of the stresses applied to the material. The yield surface can surround all permissible stress states of the elastic deformation regime. In contrast, the yield surface itself can define the permissible stress states of the plastic deformation regime, such that any stresses that lie on the yield surface indicate plastic deformation of the material. During FEM simulations, any stresses initially determined to be outside of said yield surface are scaled back to the yield surface, and the difference of the scaled value can be applied as plastic deformation.

To perform this determination and scaling during FEM simulations, the calculations involving the plasticity model and yield surface can be iteratively called for each integration point, at each timestep, and for each element. This iterative procedure, when utilized on high-resolution models and shorter timesteps, can lead to a significant amount of computational time dedicated to plasticity routines as part of the overall solution process. While custom plasticity models can be generated within some FEM software, the complexities involved in their generation can require specialized knowledge and significant time to construct. As such, the addition of new plasticity models representing new or specialized materials can be exceedingly difficult for all but expert-level users.

Accordingly, methods and systems for rapidly constructing and utilizing yield surfaces with reduced computational overhead are desirable.

### SUMMARY OF THE DISCLOSURE

Various details of the present disclosure are hereinafter summarized to provide a basic understanding. This summary is not an exhaustive overview of the disclosure and is neither intended to identify certain elements of the disclosure, nor to delineate the scope thereof. Rather, the primary purpose of this summary is to present some concepts of the disclosure in a simplified form prior to the more detailed description that is presented hereinafter.

According to an embodiment consistent with the present disclosure, a computer-implemented method includes obtaining a model representing a physical object, accessing a discretized yield surface having a plurality of data points representing a yield surface of one or more materials of the physical object, each data point corresponding to a point in a stress space and associated with a yield surface normal vector precomputed for the discretized yield surface, and calculating a stress at an integration point of the model to simulate the physical object under a load. The method further includes identifying one of the plurality of data points of the discretized yield surface that corresponds to the stress calculated in the stress space, determining plastic deformation is occurring based on the stress calculated and the one data point identified, and adjusting the stress according to a normal vector associated with the one data point identified to simulate plastic deformation of the physical object under the load.

In another embodiment, a system for modeling plastic deformation of a material includes a yield surface discretization engine operable to construct a discretized yield surface from an input model representing a physical object, the discretized yield surface having a plurality of data points representing a yield surface of the physical object, and a plasticity determination engine operable to determine elastic or plastic deformation of the physical object subjected to a load. The plasticity determination engine includes a stress space converter operable to convert a calculated stress from the load into a stress space coordinate system, a nearest neighbor determination module operable to determine a nearest neighbor point of the plurality of data points of the discretized yield surface to represent the calculated stress, and a plastic multiplier adjustment module operable to return a plastic multiplier and an adjusted stress using the nearest neighbor point and the discretized yield surface to produce a deformed model.

In a further embodiment, a computer-implemented method includes obtaining a model representing a physical object, constructing a discretized yield surface from a received input, the discretized yield surface having a plurality of data points representing a yield surface of the physical object, each data point corresponding to a point in a stress space and associated with a yield surface normal vector precomputed for the discretized yield surface, calculating a stress at an integration point of the model to simulate the physical object under a load, comparing a coordinate of the stress in the stress space with one or more neighboring data points of the discretized yield surface, and selecting a neighboring data point with a closest coordinate to the stress in the stress space as a representative data point, determining that a magnitude of the stress at the integration point of the model exceeds the stress tensor value of the discretized yield surface at the representative data point, and adjusting the stress according to a normal vector associated with the representative data point to simulate plastic deformation of the physical object under the load.

Any combinations of the various embodiments and implementations disclosed herein can be used in a further embodiment, consistent with the disclosure. These and other aspects and features can be appreciated from the following description of certain embodiments presented herein in accordance with the disclosure and the accompanying drawings and claims

### BRIEF DESCRIPTION OF THE DRAWINGS

FIG. 1 is a schematic view of an example system for constructing and utilizing discretized yield surfaces, in accordance with one or more embodiments of the present disclosure.
FIG. 2 illustrates an example of a yield surface for a plane stress (2D) model, in accordance with one or more embodiments of the present disclosure, in accordance with one or more embodiments of the present disclosure.
FIG. 3A illustrates a yield surface in principal stress coordinates with elastic deformation, in accordance with one or more embodiments of the present disclosure.
FIG. 3B illustrates a yield surface in principal stress coordinates with plastic deformation, in accordance with one or more embodiments of the present disclosure.
FIG. 4 illustrates a partial yield surface utilized in a nearest neighbor determination for the discretized yield surface, in accordance with one or more embodiments of the present disclosure.
FIG. 5 illustrates a flowchart of an example computer-implemented method for discretizing a yield surface and performing a plasticity simulation using said discretized yield surface, in accordance with one or more embodiments of the present disclosure.
FIG. 6 illustrates an example computer-implemented method for receiving a model with a discretized yield surface and deforming said model, in accordance with one or more embodiments of the present disclosure.
FIG. 7 illustrates an example computer-implemented method for constructing and utilizing a discretized yield surface in plastic deformation simulations, in accordance with one or more embodiments of the present disclosure.
FIG. 8 illustrates one example of a computer system that can be employed to execute one or more embodiments of the present disclosure.

### DETAILED DESCRIPTION

Embodiments of the present disclosure will now be described in detail with reference to the accompanying Figures. Like elements in the various figures may be denoted by like reference numerals for consistency. Further, in the following detailed description of embodiments of the present disclosure, numerous specific details are set forth in order to provide a more thorough understanding of the claimed subject matter. However, it will be apparent to one of ordinary skill in the art that the embodiments disclosed herein may be practiced without these specific details. In other instances, well-known features have not been described in detail to avoid unnecessarily complicating the description. Additionally, it will be apparent to one of ordinary skill in the art that the scale of the elements presented in the accompanying Figures may vary without departing from the scope of the present disclosure.

Embodiments in accordance with the present disclosure generally relate to determining plastic flows during deformation and, more particularly, to methods and systems for constructing and utilizing yield surfaces with plasticity models. The disclosed embodiments can include methods and systems operable to construct discretized yield surfaces that frontload the computation of yield surface quantities for efficient and rapid plasticity simulations. These discretized yield surfaces can be utilized in plasticity simulations to reduce computational overhead, such that the stored data within the discretized yield surface can be accessed rather than computed. As traditional methods can iteratively compute yield surface data for each integration point, at each timestep, and for each element, the disclosed embodiments can reduce a major source of computational cost and time during plasticity simulations. Further, the disclosed embodiments can enable the use of high-resolution discretized yield surfaces through a single front-loaded computation, such that a large number of points, N, can be selected to represent the yield surface.

Further, the embodiments disclosed herein can provide methods and systems for converting a stress on a physical object under an applied load into the stress space for use with shell or solid elements, such that a 3-dimensional or 6-dimensional yield surface can be generated based upon a corresponding stress tensor. In some embodiments, the stress in the stress space coordinate system can be equated to a nearest neighbor point of the discretized points, N, for rapid access and use of the discretized yield surface. In some disclosed embodiments, the discretized yield surfaces can be constructed using experimental data or pre-existing plasticity models through a universal yield surface receiver. As such, the systems and methods disclosed herein can enable the development and use of novel or existing plasticity models without requiring expert-level knowledge. Thus, the disclosed systems and methods can enable efficient and rapid performance of plasticity simulations, which can be performed and operated by any operator without experience or expertise. Further, the discretization of the yield surface can enable the construction of yield surface databases and provide simple sharing of the discretized yield surface outputs.

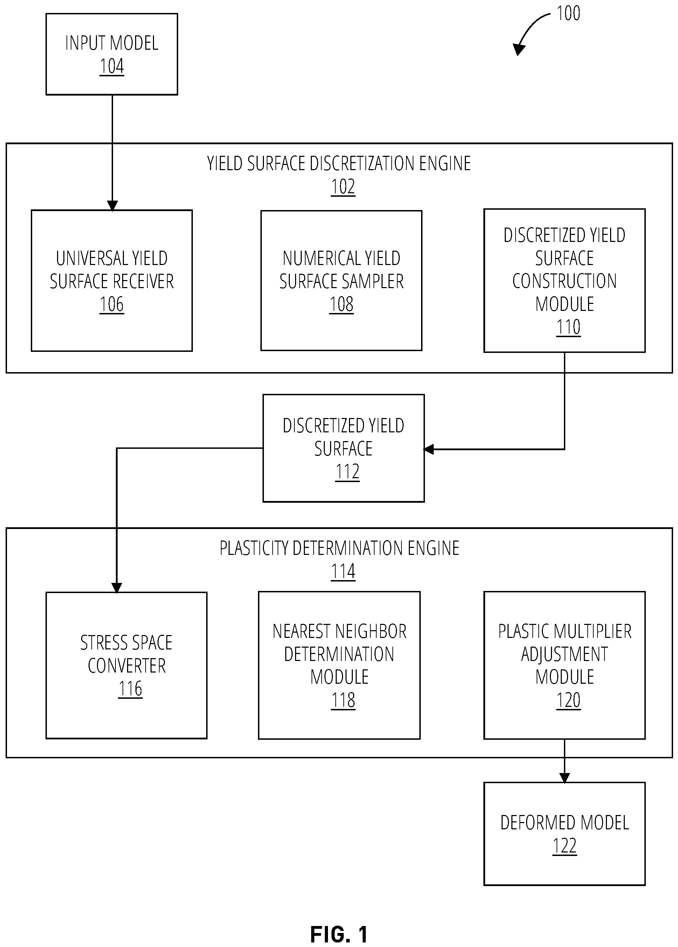

FIG. 1 is a schematic view of an example system 100 for constructing and utilizing discretized yield surfaces, in accordance with one or more embodiments of the present disclosure. The system 100 can include a yield surface discretization engine 102 operable to construct a discretized representation of a yield surface for a physical object. The yield surface discretization engine 102 can receive an input model 104 representing the physical object to undergo plastic deformation simulation. In some embodiments, the input model 104 can further include one or more material models to be utilized by the yield surface discretization engine 102. In these embodiments, the material models can include constitutive equations, which can be utilized to define the behavior of each corresponding material under plastic deformation, such that a plasticity model can be utilized. In further embodiments, however, the input model 104 can include experimental data related to the physical object that can be used for the construction and sampling of the yield surface. As such, the yield surface discretization engine 102 can include a universal yield surface receiver 106 operable to receive either experimental data or the pre-existing material models and constitutive equations for conversion to a discretized yield surface. The universal yield surface receiver 106 can provide a singular interface for an operator to provide the details of the material models of the physical object without relying upon user-defined functions or other high-level operator requirements.

The yield surface discretization engine 102 can further include a numerical yield surface sampler 108 operable to identify and sample quantities at a number of points on the yield surface for use in discretization. The numerical yield surface sampler 108 can sample the yield surface at N points to form a high-resolution representation of the yield surface without necessitating further sampling or use of the original yield surface during simulation. The N points can be selected to provide a distributed number of sample points throughout the yield surface of sufficient resolution to enable plasticity simulations without loss of accuracy. In some embodiments, the numerical yield surface sampler 108 can sample with N on the magnitude of 100,000 points on the original yield surface for the desired resolution. The numerical yield surface sampler 108 can provide reduced computational overhead in the construction of a discretized yield surface, while limiting the computational overhead of any performed simulations using said discretized yield surface. Further, the numerical yield surface sampler can be parallelized to further reduce the computational overhead, and can be performed a single time prior to the simulation of any deformation. The numerical yield surface sampler 108 can employ numerical solutions for the original yield surface to sample a stress tensor and normal vector at each of the N points, or can utilize a previously-performed parameter fitting that has mapped the experimental data to an analytical model for the sampling of the N points. In some embodiments, the numerical yield surface sampler 108 can evaluate the yield surface normal vector and evaluate the stress tensor value at the plurality of data points on the yield surface in parallel, such that the overhead dedicated to sampling the data in the numerical yield surface sampler 108 can be reduced without affecting accuracy.

The yield surface discretization engine 102 can further include a discretized yield surface construction module 110 operable to compile the sampled data at each of the N points and generate the discretized yield surface 112 for output and future export. The discretized yield surface construction module 110 can output the discretized yield surface 112 in a data structure that includes an identifier, a coordinate, a stress tensor, and a normal vector for each of the N points for use in plasticity simulations. In some embodiments, the discretized yield surface construction module 110 can enable the encryption of the exported data, such that the discretized yield surface 112 can be shared across multiple users while protecting possibly proprietary data used in the construction thereof. Further, the discretized yield surface construction module 110 can utilize a universal data structure in the output of the discretized yield surface 112, such that a plurality of solvers and software can utilize the discretized yield surface 112 without modification or conversion.

As such, the system 100 can further include a plasticity determination engine 114 operable to receive the discretized yield surface 112 and aid in plasticity simulations with reduced computational cost and time. The plasticity determination engine 114 can receive the discretized yield surface 112 and can be utilized in combination with a plasticity simulation engine (not shown) to process and utilize the discretized yield surface 112 during deformation. The plasticity determination engine 114 can further receive a stress related to a specified integration point on the physical object of the input model 104 for determination of elastic or plastic deformation. Thus, the plasticity determination engine 114 can include a stress space converter 116 operable to convert the stress tensor at said specified integration point into a location in the stress space coordinate system. The stress space converter 116 can utilize two or more of components of the stress tensor for the conversion of the stress value into the stress space coordinate system. The stress space converter 116 can enable the calculation of any plasticity variables within the material stress-space coordinate system, while further enabling the conversion of the stress tensor back to the original, element-coordinate system for the final solution.

The plasticity determination engine 114 can further include a nearest neighbor determination module 118 operable to utilize the stress value in the stress space, alongside the discretized yield surface 112, and determine a nearest neighbor point of the plurality of points N of the discretized yield surface 112. The discretized yield surface 112 can be a high-resolution representation of the original yield surface, however, the location is stress space is likely to be located between multiple of the plurality of points N.. As such, the nearest neighbor determination module 118 can identify said nearest neighbor to represent the location in the stress space when accessing the discretized yield surface 112. In some embodiments, the discretized yield surface 112 can utilize a unit sphere around the yield surface, and each point defined by a stress tensor can be accordingly mapped to a point in the unit sphere for simplified mapping procedures. As such, when a trial stress is provided for determination of elastic or plastic deformation, the trial stress can be directly mapped onto the unit sphere for comparison and calculation. During construction of the discretized yield surface 112, the plurality of points N can be stored in a data structure that organizes each point based upon the projection on the unit sphere. The nearest neighbor determination module 118 can access the discretized yield surface 112 with the stress value in the stress space (e.g., mapped to the unit sphere). Using spherical coordinates of the unit sphere, as well as the organized data structure of the discretized yield surface 112, the nearest neighbor determination module 118 can identify the nearest neighboring point of the discretized yield surface without searching or interpolation. Thus, with a high-resolution discretized yield surface 112, the nearest neighbor method of the neighbor distance calculation module 118 can provide an approximation of the location in the stress space with minimized error associated with this approximation, and without increased computational effort and time.

The plasticity determination engine 114 can further include a plastic multiplier adjustment module 120 operable to work with a plasticity simulation engine to scale an adjusted stress and plastic multiplier for use in assessing plastic deformation. The plastic multiplier adjustment module 120 can utilize the nearest neighbor representation of the location in stress space to enable the assessment of elastic or plastic deformation. The plastic multiplier adjustment module 120 can compare the stress tensor stored for the nearest neighbor representation in the discretized yield surface 112 against the value of the stress at the integration point. If the magnitude of the stress at the integration point is smaller than the magnitude of the stored stress tensor from the discretized yield surface 112, the stress lies inside of the yield surface and no plastic deformation is occurring at said integration point. However, if the magnitude of the stress at the integration point is greater than the magnitude of the stored stress tensor, the physical model is undergoing plastic deformation at said integration point. The discretized yield surface 112 can then be further utilized, as the plastic multiplier adjustment module 120 can access the discretized yield surface 112 to obtain the normal vector value at the nearest neighbor, which is utilized to return the stress to the yield surface. The normal vector of the discretized yield surface 112 can thus be utilized in adjusting the plastic multiplier, increasing the plastic strain and adjusting the yield surface based upon hardening, until the stress lies upon the yield surface with a further quantified plastic deformation.

Using these values alongside the plasticity simulation engine, the system 100 can accordingly produce a deformed model 122 of the input model 104 that accounts for plastic deformation without the use and costs associated with the original yield surface. In traditional systems, the original yield surface can be sampled and computed at each integration point, at each timestep, for each element of the input model 104, such that the yield surface calculations can be one of the largest contributors to overall simulation time and complexity. In contrast, the system 100 can frontload any yield surface computations to construct the discretized yield surface 112, which comprises a discretized version of the yield surface with associated stress tensors and normal vectors. The system 100 can thus utilize the discretized yield surface 112 for rapid access and utilization of this data without any additional computation or calculations, such that the runtime of a plasticity algorithm can be reduced by up to 50% for a single simulation, without sacrificing accuracy of the results.

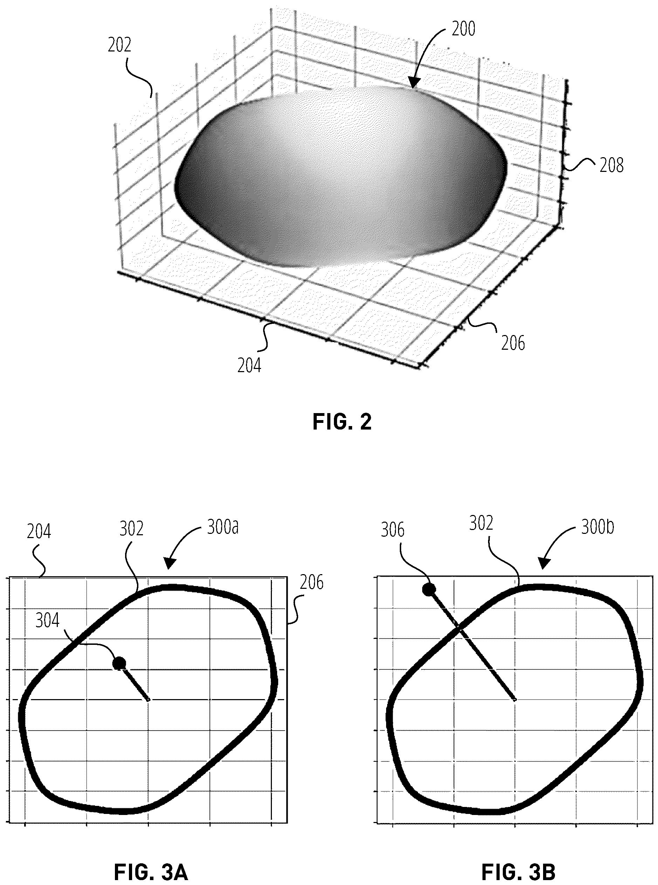

FIG. 2 illustrates an example of a yield surface 200 for a plane stress (2D) model, in accordance with one or more embodiments of the present disclosure. The yield surface 200 within the 3D stress space 202 can be seen as an organically-shaped three-dimensional surface that defines a boundary between the elastic and plastic deformation regimes for an associated physical object and material. The yield surface 200 is defined with the 3D stress space 202, such that each point on and within the yield surface 200 possesses a coordinate based upon the stresses (σ₁₁, σ₂₂, σ₁₂) of the 2D stress tensor. In further embodiments, a 3D stress tensor can be utilized, in which there are 6 stress terms and a corresponding six-dimensional yield surface. As shown in FIG. 2, a first axis is defined by a first stress 204 (σ₁₁), a second axis is defined by a second stress 206 (σ₂₂), and a third axis is defined by a third stress 208 (σ₁₂). The representation of any single stress tensor within the stress space based upon the three stresses 204-208 can enable the evaluation of elastic vs. plastic deformation through the yield surface 200. The conversion of a stress tensor into this stress space (*e.g.,* via the stress space converter 116) can be used to determine if said stress tensor lies within the yield surface 200 or outside of the yield surface 200, as well as the scaling back of the stress tensor and increase of a plastic multiplier to align with the yield surface 200 (*e.g.,* via the plastic multiplier adjustment module 120).

FIG. 3A illustrates a yield surface 302 in principal stress coordinates with elastic deformation, in accordance with one or more embodiments of the present disclosure. The 2D stress space with elastic deformation 300a within the 2D yield surface 302 can represent a horizontal slice of the yield surface 200 of FIG. 2, such that the 2D yield surface 302 is the yield surface 200 when the third stress 208 (σ₁₂) has a value of zero. As such, the 2D yield surface 302 can be defined using the first stress 204 and second stress 206 as axes for the coordinate system, while the interior of the 2D yield surface 302 can be seen through this slice of the yield surface 200. In the illustrated embodiment, an elastic deformation stress 304 has been applied to the model, and the integration point corresponding to the elastic deformation stress 304 has been confirmed to be within the 2D yield surface 302. As the 2D yield surface 302 defines the boundary of all elastic stress within the model and material, the elastic deformation stress 304 can be seen to present only elastic deformation of the model, such that no plastic deformation is occurring.

FIG. 3B illustrates the yield surface 302 in principal stress coordinates with plastic deformation, in accordance with one or more embodiments of the present disclosure. In contrast to FIG. 3A, the 2D stress space with plastic deformation 300b within the 2D yield surface 302 of FIG. 3B depicts a plastic deformation stress 306 defined within the 2D stress space 300b. The plastic deformation stress 306 is shown to lie outside of the 2D yield surface 302, such that the plastic deformation stress 306 surpasses elastic deformation and provides plastic deformation to the model. As such, the plastic deformation stress 306 can be accordingly scaled back to the 2D yield surface 302 via an iterative plasticity algorithm. Said plasticity algorithm can utilize the stored normal vector for the discretized yield surface 112 of FIG. 1 to bring the plastic deformation stress 306 back to the 2D yield surface 302, through the adjustment of the said stress tensor and correlated plastic multiplier. Through the use of the discretized yield surface 112 of FIG. 1, however, the determination of elastic or plastic flow, as well as the scaling of the plastic deformation stress 306 to the 2D yield surface 302 can be optimized through the use of pre-computed values.

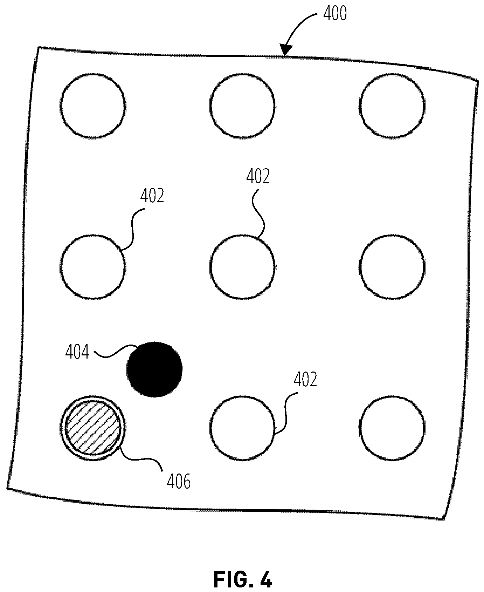

FIG. 4 illustrates a partial yield surface 400 utilized in a nearest neighbor determination for the discretized yield surface, in accordance with one or more embodiments of the present disclosure. The partial yield surface 400 can represent a section of the yield surface 200 of FIG. 2, such that only a portion of the yield surface 200 is shown for illustrative purposes. The partial yield surface 400, as shown, can represent the original yield surface of the input model 104 of FIG. 1, such that the partial yield surface 400 is a continuous surface. However, within the partial yield surface 400, a plurality of discrete yield surface points 402 are shown, which form the discretized yield surface 112 of FIG. 1.

During an example simulation, a calculated stress 404 can be provided, which corresponds to the trial stress calculated for a specified integration point within the physical object. The calculated stress 404 can be seen to be separated from each discrete yield surface points 402, such that there is no defined value of the discretized yield surface 112 for the specific calculated stress 404. As such, the organized data structure of the discretized yield surface 112 can be accessed, such that the coordinates of the calculated stress 404 can be compared to those of the neighboring discrete yield surface points 402. Based upon the structure of the discretized yield surface 112, the coordinate value of the calculated stress 404 can be determined to be closest in value to the nearest neighbor 406. Thus, the calculated stress 404 can be represented via the nearest neighbor 406, and the stored data corresponding thereto, in the determination of elastic or plastic deformation.

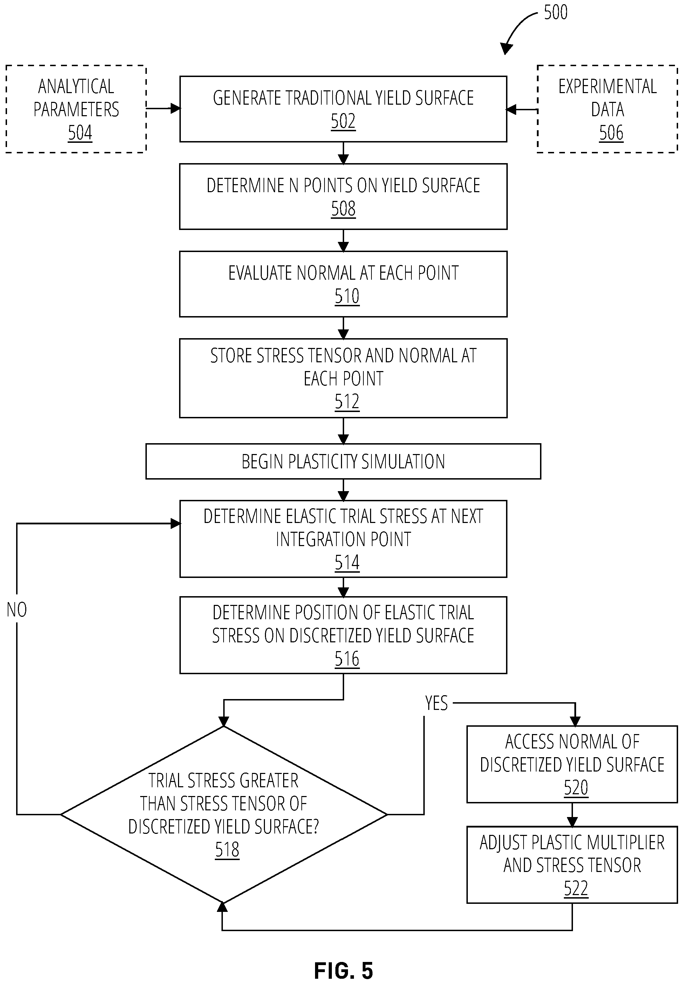

In view of the structural and functional features described above, example methods will be better appreciated with reference to FIGS. 5-6. While, for purposes of simplicity of explanation, the example methods of FIGS. 5-6 are shown and described as executing serially, it is to be understood and appreciated that the present examples are not limited by the illustrated order, as some actions could in other examples occur in different orders, multiple times and/or concurrently from that shown and described herein. Moreover, it is not necessary that all described actions be performed to implement the methods, and conversely, some actions may be performed that are omitted from the description.

FIG. 5 illustrates a flowchart of an example computer-implemented method 500 for discretizing a yield surface and performing a plasticity simulation using said discretized yield surface, in accordance with one or more embodiments of the present disclosure. The method 500 may be implemented by the system 100 of FIG. 1. Thus, reference may be made to the example of FIGS. 1-4 in the example method 500 of FIG. 5. The method 500 can begin at 502 with generating a traditional yield surface, which corresponds to the elastic limit of an input model (*e.g.,* the input model 104). The traditional yield surface can be generated from either analytical parameters 504 or experimental data 506 provided via operator input, or stored on a computer-readable medium. In some embodiments, the experimental data can be related to a stress-strain relationship of a physical object to generate the yield surface, and can be parameter-fit to an analytical model for defining a yield surface. The analytical parameters 504 and/or experimental data 506 can be received (*e.g.,* via the universal yield surface receiver 106) to define the traditional yield surface of the physical object and material.

The method 500 can continue at 508 with determining N points on the traditional yield surface for constructing a discretized yield surface (*e.g.,* the discretized yield surface 112). The N points can be selected to provide a high-resolution version of the traditional yield surface in a discrete, point-based representation. The N points can be uniformly distributed about the traditional yield surface, or can be adaptively refined to include denser point distribution at or near complex features of the traditional yield surface. The method 500 can continue at 510 with evaluating the normal vector for each of the N points on the traditional yield surface, which can be paired to the corresponding stress tensor at each of the N points (*e.g.,* via the numerical yield surface sampler 108). The normal vector and stress tensor at each point can be found through numerical methods, which can be utilized in solving non-linear equations for creating a discretized yield surface. The method 500 can continue at 512 with storing the stress tensor and the normal vector at each of the N points, alongside a unique identifier and coordinate on the unit sphere. The storage of the stress tensor and normal vector at 512 can represent the construction of a discretized yield surface (*e.g.,* via the discretized yield surface construction module 110), such that the data structure including these values can be utilized in place of the traditional yield surface within a plasticity simulation.

As such, following the construction of the discretized yield surface at 512, the method 500 can continue with initiating a plasticity simulation that uses provided loads to determine deformation of an input model based upon the discretized yield surface. The plasticity simulation can be performed using the discretized yield surface to provide determination of elastic or plastic deformation, as well as using the discretized yield surface in the scaling of any plastic deformation back to the yield surface (*e.g.*, via the plasticity determination engine 114). The method 500 can thus continue at 514 with determining an elastic trial stress at a first, or next, integration point, depending upon the current timestep loop. The determination of the elastic trial stress at 514 can provide the stress to be tested at the specified integration point of the model, such that elastic or plastic deformation can occur at said integration point. Following calculation of the elastic trial stress at 514, the elastic trial stress can be mapped to the unit sphere in stress space at 516 (*e.g.,* via the stress space converter 116), such that the position of the elastic trial stress with relation to the discretized yield surface can be determined.

The position of the elastic trial stress determined at 516 can be utilized at 518 in determining if the trial stress is greater than the stress tensor for a similar location on the discretized yield surface. The position of the elastic trial stress can be utilized at 516 and/or 518 to determine a nearest neighbor on the discretized yield surface that can be used to represent the elastic trial stress within the discretized yield surface (*e.g.,* via the neighbor distance calculation module 118). Based upon the presence of the elastic trial stress within the discretized yield surface, the method 500 can continue at 520 with accessing the stored normal vector of the discretized yield surface at the representative point. This stored normal vector can be utilized at 522 in an iterative plasticity algorithm to step the magnitude of the elastic trial stress back towards the discretized yield surface, while increasing a plastic multiplier. After an adjustment to the trial stress and plastic multiplier, the method 500 can return to 518 with a further determination of whether the trial stress is on or outside of the discretized yield surface. If the trial stress remains exceeding the discretized yield surface, the method 500 can iteratively loop through 520 and 522 to continue adjusting the stress tensor and plastic multiplier until the trial stress lies on the discretized yield surface. Once the trial stress is determined to lie or inside of the discretized yield surface at 518, the method can continue cyclically at 514, with a further integration point selected for testing and possible adjustment.

The method 500 can continue within the plasticity simulation at a number of timesteps, in which the loop from 514-522 can continue across each integration point for each timestep. As such, the use of the constructed discretized yield surface at 516, 518, and 520 can provide computationally efficient solution methods for the plastic deformation determination. As opposed to traditional methods which can call for the numerical solution of the traditional yield surface at each integration point for each timestep, the use of the discretized yield surface can reduce this plasticity algorithm by up to 50% without appreciable loss of quality.

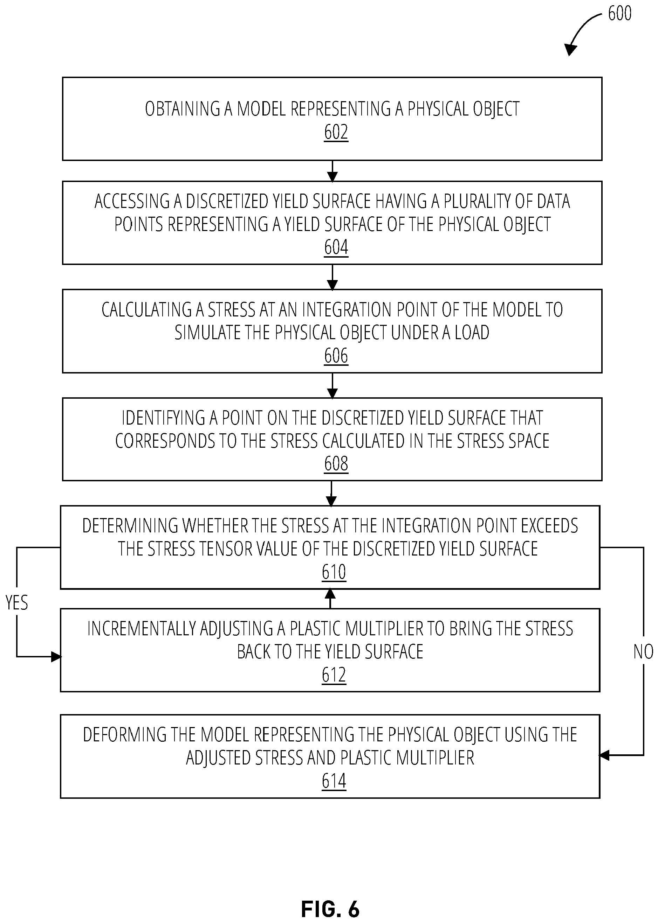

FIG. 6 illustrates an example computer-implemented method 600 for receiving a model with a discretized yield surface and deforming said model, in accordance with one or more embodiments of the present disclosure. The method 600 may be implemented by the system 100 of FIG. 1. Thus, reference may be made to the example of FIGS. 1-4 in the example method 600 of FIG. 6. The method 600 can begin at 602 with obtaining a model representing a physical object (*e.g.,* the input model 104), which can include a discretized yield surface (*e.g.,* the discretized yield surface 112) for the performance of a plasticity simulation. The method 600 can continue at 604 with accessing the discretized yield surface to extract the stress tensors and normal vectors at each of the plurality of points N within the discretized yield surface 112. Accessing the discretized yield surface at 604 can enable the rapid determination and use of these values during the plasticity simulation without including additional computational overhead.

With the accessed discretized yield surface, the method 600 can continue at 606 with calculating a stress of an integration point of the input model to simulate the physical object under a prescribed load. During the plasticity simulation, each element and integration point of the input model can be tested at each timestep to determine the nature and extent of deformation occurring at said integration point. As such, the stress tensor at the tested integration point can be calculated and utilized in determining elastic or plastic deformation. As such, the method 600 can continue at 608 with identifying a point on the discretized yield surface that corresponds to, or represents, the calculated stress tensor when in the stress space (*e.g.,* via the stress space converter 116 and neighbor distance calculation module 118) with the lowest possible error.

The method 600 can continue at 610 with determining whether the calculated stress tensor lies exceeds the stress tensor value of the discretized yield surface. The calculated stress tensor can be compared to the stress tensor value at the representative point, and if the value of the calculated stress tensor does exceed the value of the discretized yield surface 112, the method 600 can continue at 612. At 612, the value of the calculated stress tensor and a plastic multiplier can be adjusted by an iterative plasticity algorithm (*e.g.,* via the plastic multiplier adjustment module 120) to bring the excessive calculated stress tensor back to the discretized yield surface. The adjustment at 612 can rely upon the normal vector value stored for the representative point, rather than the traditional method of numerically sampling a continuous yield surface, thus reducing the time taken to adjust the plastic multiplier and assess plasticity. After adjustment of the plastic multiplier and the calculated stress tensor, the method 600 can return to 610 for further determination whether the adjusted stress tensor still remains outside of the discretized yield surface. The method 600 can iteratively adjust the stress tensor and plastic multiplier through 610 and 612 until the adjusted stress tensor is determined to be on or inside of the discretized yield surface at 610.

The method 600 can then continue to 614, either after adjusting the plastic multiplier or determining that elastic deformation was occurring at 610, with deforming the model representing the physical object via the adjusted stress tensor and any plastic multipliers. The model can be deformed at 614 based upon the deformation of each integration point, and the deformation can be performed at each timestep until a final criterion is reached. As such, the method 600 can enable the use of a discretized yield surface for efficiently simulating the elastic and plastic deformation of the input model with reduced computational cost and overtime to produce a final deformed model (*e.g.,* the deformed model 122).

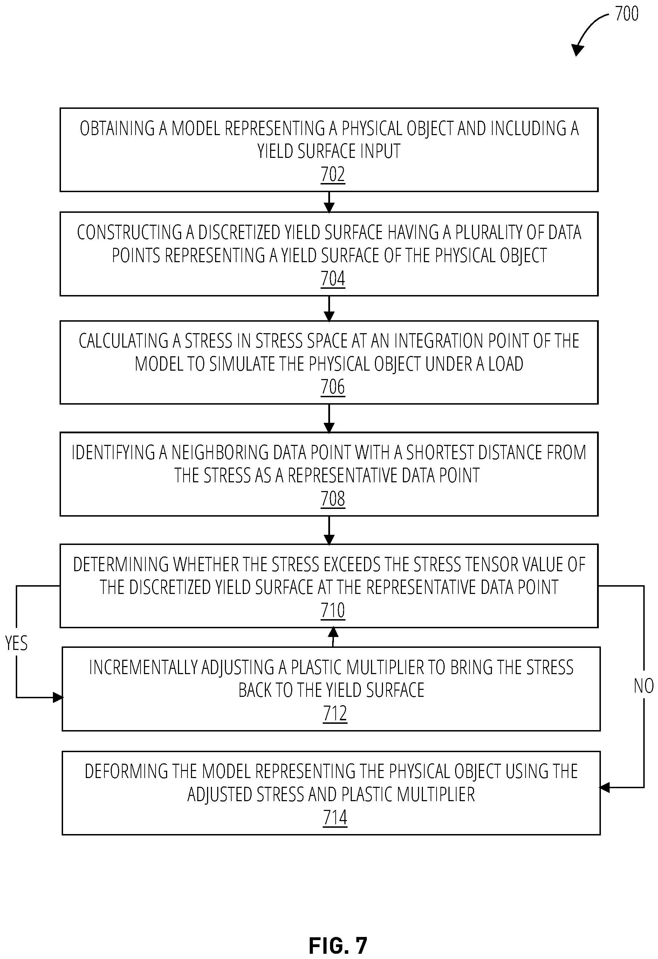

FIG. 7 illustrates an example computer-implemented method 700 for constructing and utilizing a discretized yield surface in plastic deformation simulations, in accordance with one or more embodiments of the present disclosure. The method 700 may be implemented by the system 100 of FIG. 1. Thus, reference may be made to the example of FIGS. 1-4 in the example method 700 of FIG. 7. The method 700 can begin at 702 with obtaining a model representing a physical object (*e.g.,* the input model 104), which can include a yield surface input (*e.g.,* the analytical parameters 504 or experimental data 506) for the construction of a discretized yield surface (*e.g.,* the discretized yield surface 112). The yield surface input can be received (*e.g.,* via the universal yield surface receiver 106) to enable a user to provide a variety of data that can be used to form a traditional yield surface without user-defined functions or complex operations.

The method 700 can continue at 704 with constructing the discretized yield surface, the discretized yield surface having a plurality of points, N, and representing a yield surface of the physical object and material. The construction of the discretized yield surface at 704 can include the identification of the N points on a traditional yield surface, and the sampling of the stress tensors and normal vector at each point N on the traditional yield surface (*e.g.,* via the numerical yield surface sampler 108). This data can be compiled at 704 (*e.g.,* via the discretized yield surface construction module 110) to construct a data structure including each point N, a unique identifier, and the extracted data for use in further plasticity simulations. In some embodiments, the discretized yield surface can be encrypted to enable sharing of the material models with constitutive equations/discretized yield surface without risking sensitive or proprietary data.

With the constructed, discretized yield surface, the method 700 can continue at 706 with calculating a stress of an integration point of the input model to simulate the physical object under a prescribed load. During the plasticity simulation, each element and integration point of the input model can be tested at each timestep to determine the nature and extent of deformation occurring at said integration point. As such, the stress tensor at the tested integration point can be calculated and utilized in determining elastic or plastic deformation. As such, the method 700 can continue at 708 with the determination and identification of a nearest neighbor point of the discretized yield surface (*e.g.,* nearest neighbor 406) at or near the spherical coordinates of the calculated stress tensor. The calculated stress tensor can be mapped to the unit sphere within the stress space and the discretized yield surface, such that the calculated stress tensor can be represented within the stress space and with relation to the yield surface. Upon mapping to the unit sphere, a number of neighboring points of the plurality of points N forming the discretized yield surface can be identified as possible representative points. The identification at 708 can provide a neighboring point with the smallest magnitude of distance from the calculated stress tensor can be identified and chosen to represent the calculated stress tensor with regards to the stored data of the discretized yield surface.

The method 700 can continue at 710 with determining whether the calculated stress tensor lies exceeds the stress tensor value of the discretized yield surface. The calculated stress tensor can be compared to the stress tensor value at the representative point, and if the value of the calculated stress tensor does exceed the value of the discretized yield surface 112, the method 700 can continue at 712. At 712, the value of the calculated stress tensor and a plastic multiplier can be adjusted by an iterative plasticity algorithm (*e.g.,* via the plastic multiplier adjustment module 120) to bring the excessive calculated stress tensor back to the discretized yield surface. The adjustment at 712 can rely upon the normal vector value stored for the representative point, rather than the traditional method of numerically sampling a continuous yield surface, thus reducing the time taken to adjust the plastic multiplier and assess plasticity. After adjustment of the plastic multiplier and the calculated stress tensor, the method 700 can return to 710 for further determination whether the adjusted stress tensor still remains outside of the discretized yield surface. The method 700 can iteratively adjust the stress tensor and plastic multiplier through 710 and 712 until the adjusted stress tensor is determined to be on or inside of the discretized yield surface at 710.

The method 700 can then continue to 714, either after adjusting the plastic multiplier or determining that elastic deformation was occurring at 710, with deforming the model representing the physical object via the adjusted stress tensor and any plastic multipliers. The model can be deformed at 714 based upon the deformation of each integration point, and the deformation can be performed at each timestep until a final criterion is reached. As such, the method 700 can enable the construction and utilization of a discretized yield surface for efficiently simulating the elastic and plastic deformation of the input model with reduced computational cost and overtime to produce a final deformed model (*e.g.,* the deformed model 122), through determining a plastic strain of the physical object under the load using the plastic multiplier to simulate plastic deformation.

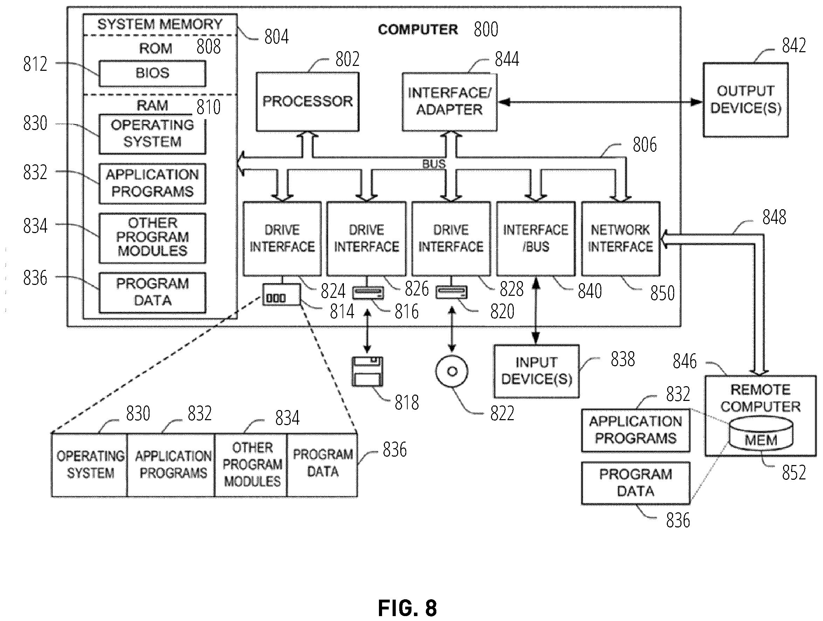

In view of the foregoing structural and functional description, those skilled in the art will appreciate that portions of the embodiments may be embodied as a method, data processing system, or computer program product. Accordingly, these portions of the present embodiments may take the form of an entirely hardware embodiment, an entirely software embodiment, or an embodiment combining software and hardware, such as shown and described with respect to the computer system of FIG. 8. Furthermore, portions of the embodiments may be a computer program product on a computer-readable storage medium having computer readable program code on the medium. Any non-transitory, tangible storage media possessing structure may be utilized including, but not limited to, static and dynamic storage devices, volatile and non-volatile memories, hard disks, optical storage devices, and magnetic storage devices, but excludes any medium that is not eligible for patent protection under 35 U.S.C. § 101 (such as a propagating electrical or electromagnetic signals *per se*). As an example and not by way of limitation, computer-readable storage media may include a semiconductor-based circuit or device or other IC (such, as for example, a field-programmable gate array (FPGA) or an ASIC), a hard disk, an HDD, a hybrid hard drive (HHD), an optical disc, an optical disc drive (ODD), a magneto-optical disc, a magneto-optical drive, a floppy disk, a floppy disk drive (FDD), magnetic tape, a holographic storage medium, a solid-state drive (SSD), a RAM-drive, a SECURE DIGITAL card, a SECURE DIGITAL drive, or another suitable computer-readable storage medium or a combination of two or more of these, where appropriate. A computer-readable non-transitory storage medium may be volatile, nonvolatile, or a combination of volatile and non-volatile, as appropriate.

Certain embodiments have also been described herein with reference to block illustrations of methods, systems, and computer program products. It will be understood that blocks and/or combinations of blocks in the illustrations, as well as methods or steps or acts or processes described herein, can be implemented by a computer program comprising a routine of set instructions stored in a machine-readable storage medium as described herein. These instructions may be provided to one or more processors of a general purpose computer, special purpose computer, or other programmable data processing apparatus (or a combination of devices and circuits) to produce a machine, such that the instructions of the machine, when executed by the processor, implement the functions specified in the block or blocks, or in the acts, steps, methods and processes described herein.

These processor-executable instructions may also be stored in computer-readable memory that can direct a computer or other programmable data processing apparatus to function in a particular manner, such that the instructions stored in the computer-readable memory result in an article of manufacture including instructions which implement the function specified. The computer program instructions may also be loaded onto a computer or other programmable data processing apparatus to cause a series of operational steps to be performed on the computer or other programmable apparatus to realize a computer implemented process such that the instructions which execute on the computer or other programmable apparatus provide steps for implementing the functions specified in flowchart blocks that may be described herein.

In this regard, FIG. 8 illustrates one example of a computer system 800 that can be employed to execute one or more embodiments of the present disclosure. Computer system 800 can be implemented on one or more general purpose networked computer systems, embedded computer systems, routers, switches, server devices, client devices, various intermediate devices/nodes, or standalone computer systems. Additionally, computer system 800 can be implemented on various mobile clients such as, for example, a personal digital assistant (PDA), laptop computer, pager, and the like, provided it includes sufficient processing capabilities.

Computer system 800 includes processing unit 802, system memory 804, and system bus 806 that couples various system components, including the system memory 804, to processing unit 802. System memory 804 can include volatile (*e.g.*, RAM, DRAM, SDRAM, Double Data Rate (DDR) RAM, *etc*.) and non-volatile (*e.g.,* Flash, NAND, *etc*.) memory. Dual microprocessors and other multi-processor architectures also can be used as processing unit 802. System bus 806 may be any of several types of bus structure including a memory bus or memory controller, a peripheral bus, and a local bus using any of a variety of bus architectures. System memory 804 includes read only memory (ROM) 808 and random access memory (RAM) 810. A basic input/output system (BIOS) 812 can reside in ROM 808 containing the basic routines that help to transfer information among elements within computer system 800.

Computer system 800 can include a hard disk drive 814, magnetic disk drive 816, *e.g.,* to read from or write to removable disk 818, and an optical disk drive 820, *e.g.,* for reading CD-ROM disk 822 or to read from or write to other optical media. Hard disk drive 814, magnetic disk drive 816, and optical disk drive 820 are connected to system bus 806 by a hard disk drive interface 824, a magnetic disk drive interface 826, and an optical drive interface 828, respectively. The drives and associated computer-readable media provide nonvolatile storage of data, data structures, and computer-executable instructions for computer system 800. Although the description of computer-readable media above refers to a hard disk, a removable magnetic disk and a CD, other types of media that are readable by a computer, such as magnetic cassettes, flash memory cards, digital video disks and the like, in a variety of forms, may also be used in the operating environment; further, any such media may contain computer-executable instructions for implementing one or more parts of embodiments shown and described herein.

A number of program modules may be stored in drives and ROM 808, including operating system 830, one or more application programs 832, other program modules 834, and program data 836. In some examples, the application programs 832 can include the yield surface discretization engine 102, the universal yield surface receiver 106, the numerical yield surface sampler 108, the discretized yield surface construction module 110, the plasticity determination engine 114, the stress space converter 116, the neighbor distance calculation module 118, and the plastic multiplier adjustment module 120, and the program data 836 can include any of the input model 104, the discretized yield surface 112, the analytical parameters 504, the experimental data 506, the deformed model 122, and any combination thereof. The application programs 832 and program data 836 can include functions and methods programmed to construct a discretized yield surface and utilized said discretized yield surface in plastic deformation simulations, such as shown and described herein.

A user may enter commands and information into computer system 800 through one or more input device 838, such as a pointing device (*e.g.,* a mouse, touch screen), keyboard, microphone, joystick, game pad, scanner, and the like. These and other input devices 838 are often connected to processing unit 802 through a corresponding port interface 840 that is coupled to the system bus, but may be connected by other interfaces, such as a parallel port, serial port, or universal serial bus (USB). One or more output devices 842 (*e.g.,* display, a monitor, printer, projector, or other type of displaying device) is also connected to system bus 806 via interface 844, such as a video adapter.

Computer system 800 may operate in a networked environment using logical connections to one or more remote computers, such as remote computer 846. Remote computer 846 may be a workstation, computer system, router, peer device, or other common network node, and typically includes many or all the elements described relative to computer system 800. The logical connections, schematically indicated at 848, can include a local area network (LAN) and/or a wide area network (WAN), or a combination of these, and can be in a cloud-type architecture, for example configured as private clouds, public clouds, hybrid clouds, and multi-clouds. When used in a LAN networking environment, computer system 800 can be connected to the local network through a network interface or adapter 850. When used in a WAN networking environment, computer system 800 can include a modem, or can be connected to a communications server on the LAN. The modem, which may be internal or external, can be connected to system bus 806 via an appropriate port interface. In a networked environment, application programs 832 or program data 836 depicted relative to computer system 800, or portions thereof, may be stored in a remote memory storage device 852.

Embodiments disclosed herein include:
A. A computer-implemented method including obtaining a model representing a physical object, accessing a discretized yield surface having a plurality of data points representing a yield surface of one or more materials of the physical object, each data point corresponding to a point in a stress space and associated with a yield surface normal vector precomputed for the discretized yield surface, and calculating a stress at an integration point of the model to simulate the physical object under a load, identifying one of the plurality of data points of the discretized yield surface that corresponds to the stress calculated in the stress space, determining plastic deformation is occurring based on the stress calculated and the one data point identified, and adjusting the stress according to a normal vector associated with the one data point identified to simulate plastic deformation of the physical object under the load.
B. A system for modeling plastic deformation of a material including a yield surface discretization engine operable to construct a discretized yield surface from an input model representing a physical object, the discretized yield surface having a plurality of data points representing a yield surface of the physical object, and a plasticity determination engine operable to determine elastic or plastic deformation of the physical object subjected to a load, the plasticity determination engine including a stress space converter operable to convert a calculated stress from the load into a stress space coordinate system, a nearest neighbor determination module operable to determine a nearest neighbor point of the plurality of data points of the discretized yield surface to represent the calculated stress, and a plastic multiplier adjustment module operable to return a plastic multiplier and an adjusted stress using the nearest neighbor point and the discretized yield surface to produce a deformed model.
C. A computer-implemented method including obtaining a model representing a physical object, constructing a discretized yield surface from a received input, the discretized yield surface having a plurality of data points representing a yield surface of the physical object, each data point corresponding to a point in a stress space and associated with a yield surface normal vector precomputed for the discretized yield surface, calculating a stress at an integration point of the model to simulate the physical object under a load, comparing a coordinate of the stress in the stress space with one or more neighboring data points of the discretized yield surface, and selecting a neighboring data point with a closest coordinate to the stress in the stress space as a representative data point, determining that a magnitude of the stress at the integration point of the model exceeds the stress tensor value of the discretized yield surface at the representative data point, and adjusting the stress according to a normal vector associated with the representative data point to simulate plastic deformation of the physical object under the load.

Each of the embodiments A through C may have one or more of the following additional elements in any combination: Element 1: wherein identifying the one of the plurality of data points includes: comparing a coordinate of the stress in the stress space with one or more neighboring data points of the discretized yield surface; and selecting a neighboring data point with a closest coordinate to the stress calculated in the stress space as the one of the plurality of data points. Element 2: wherein identifying the one data point further comprises: mapping the stress on the integration point of the model to a point on a unit sphere defined within the stress space. Element 3: further comprising: evaluating the yield surface normal vector and a stress tensor value at the plurality of data points on the yield surface of the physical object; and storing the stress tensor value and the yield surface normal vector at each of the plurality of data points on the yield surface to construct the discretized yield surface within the stress space. Element 4: wherein determining plastic deformation further comprises: evaluating a magnitude of the stress at the integration point of the model; and determining that the magnitude of the stress at the integration point of the model exceeds the stress tensor value of the discretized yield surface at the one data point identified. Element 5: wherein adjusting the stress further comprises: accessing the yield surface normal vector from the discretized yield surface at the one data point identified; iteratively adjusting the magnitude of the stress at the integration point of the model towards the stress tensor value of the discretized yield surface using the yield surface normal vector; and iteratively adjusting a plastic multiplier in response to iteratively adjusting the magnitude of the stress. Element 6: further comprising: determining plastic strain of the physical object under the load using the plastic multiplier to simulate plastic deformation. Element 7: wherein evaluating the yield surface normal vector and evaluating the stress tensor value at the plurality of data points on the yield surface are performed in parallel. Element 8: further comprising: exporting the discretized yield surface including the stress tensor value and the yield surface normal at each of the plurality of data points for further use. Element 9: wherein obtaining the model includes receiving experimental data related to a stress-strain relationship of a physical object to generate the yield surface.

Element 10: wherein the yield surface discretization engine includes a universal yield surface receiver operable to receive experimental data, parameters for an existing plasticity model, or a combination thereof to construct the discretized yield surface. Element 11: wherein the yield surface discretization engine includes a numerical yield surface sampler operable to identify the plurality of data points on the yield surface to construct the discretized yield surface. Element 12: wherein the yield surface discretization engine further includes a discretized yield surface construction module operable to sample a stress tensor and normal at each of the plurality of data points for storage and output as the discretized yield surface. Element 13: wherein the plastic multiplier adjustment module utilizes the nearest neighbor and the calculated stress to determine whether the calculated stress is within the discretized yield surface or externally located. Element 14: wherein the plastic multiplier adjustment module utilizes an iterative algorithm to return an externally located stress to the discretized yield surface as the adjusted stress while adjusting the plastic multiplier. Element 15: wherein adjusting the stress includes: accessing the yield surface normal vector from the discretized yield surface at the neighboring data point; incrementally adjusting the magnitude of the stress at the integration point of the model towards the stress tensor value of the discretized yield surface using the yield surface normal vector; and incrementally adjusting a plastic multiplier in response to incrementally adjusting the magnitude of the stress. Element 16: wherein the received universal input includes experimental data related to a stress-strain relationship of a physical object to generate a traditional yield surface. Element 17: wherein constructing the discretized yield surface includes: evaluating the yield surface normal vector and a stress tensor value at the plurality of data points on the yield surface of the physical object; and storing the stress tensor value and the yield surface normal vector at each of the plurality of data points on the yield surface.

By way of non-limiting example, exemplary combinations applicable to A through C include: Element 1 with Element 2; Element 3 with Element 4; Element 4 with Element 5; Element 6 with Element 7; Element 3 with Element 7; Element 3 with Element 8; Element 11 with Element 12; and Element 13 with Element 14.

The terminology used herein is for the purpose of describing particular embodiments only and is not intended to be limiting of the invention. As used herein, for example, the singular forms "a," "an," and "the" are intended to include the plural forms as well, unless the context clearly indicates otherwise. It will be further understood that the terms "contains", "containing", "includes", "including," "comprises", and/or "comprising," and variations thereof, when used in this specification, specify the presence of stated features, integers, steps, operations, elements, and/or components, but do not preclude the presence or addition of one or more other features, integers, steps, operations, elements, components, and/or groups thereof.

Terms of orientation used herein are merely for purposes of convention and referencing and are not to be construed as limiting. However, it is recognized these terms could be used with reference to an operator or user. Accordingly, no limitations are implied or to be inferred. In addition, the use of ordinal numbers (*e.g.*, first, second, third, etc.) is for distinction and not counting. For example, the use of "third" does not imply there must be a corresponding "first" or "second." Also, if used herein, the terms "coupled" or "coupled to" or "connected" or "connected to" or "attached" or "attached to" may indicate establishing either a direct or indirect connection, and is not limited to either unless expressly referenced as such.

While the disclosure has described several exemplary embodiments, it will be understood by those skilled in the art that various changes can be made, and equivalents can be substituted for elements thereof, without departing from the spirit and scope of the invention. In addition, many modifications will be appreciated by those skilled in the art to adapt a particular instrument, situation, or material to embodiments of the disclosure without departing from the essential scope thereof. Therefore, it is intended that the invention not be limited to the particular embodiments disclosed, or to the best mode contemplated for carrying out this invention, but that the invention will include all embodiments falling within the scope of the appended claims. Moreover, reference in the appended claims to an apparatus or system or a component of an apparatus or system being adapted to, arranged to, capable of, configured to, enabled to, operable to, or operative to perform a particular function encompasses that apparatus, system, or component, whether or not it or that particular function is activated, turned on, or unlocked, as long as that apparatus, system, or component is so adapted, arranged, capable, configured, enabled, operable, or operative.

## Claims

1. A computer-implemented method comprising the steps of:
obtaining a model representing a physical object;
accessing a discretized yield surface having a plurality of data points representing a yield surface of one or more materials of the physical object, each data point corresponding to a point in a stress space and associated with a yield surface normal vector precomputed for the discretized yield surface;
calculating a stress at an integration point of the model to simulate the physical object under a load;
identifying one of the plurality of data points of the discretized yield surface that corresponds to the stress calculated in the stress space;
determining plastic deformation is occurring based on the stress calculated and the one data point identified; and
adjusting the stress according to a normal vector associated with the one data point identified to simulate plastic deformation of the physical object under the load.

2. The computer-implemented method of claim 1, wherein identifying the one of the plurality of data points includes:
comparing a coordinate of the stress in the stress space with one or more neighboring data points of the discretized yield surface; and
selecting a neighboring data point with a closest coordinate to the stress calculated in the stress space as the one of the plurality of data points.

3. The computer-implemented method of claim 2, wherein identifying the one data point further comprises:
mapping the stress on the integration point of the model to a point on a unit sphere defined within the stress space.

4. The computer-implemented method of claim 1, further comprising:
evaluating the yield surface normal vector and a stress tensor value at the plurality of data points on the yield surface of the physical object; and
storing the stress tensor value and the yield surface normal vector at each of the plurality of data points on the yield surface to construct the discretized yield surface within the stress space.

5. The computer-implemented method of claim 4, wherein determining plastic deformation further comprises:
evaluating a magnitude of the stress at the integration point of the model; and
determining that the magnitude of the stress at the integration point of the model exceeds the stress tensor value of the discretized yield surface at the one data point identified.

6. The computer-implemented method of claim 5, wherein adjusting the stress further comprises:
accessing the yield surface normal vector from the discretized yield surface at the one data point identified;
iteratively adjusting the magnitude of the stress at the integration point of the model towards the stress tensor value of the discretized yield surface using the yield surface normal vector; and
iteratively adjusting a plastic multiplier in response to iteratively adjusting the magnitude of the stress.

7. The computer-implemented method of claim 6, further comprising:
determining plastic strain of the physical object under the load using the plastic multiplier to simulate plastic deformation.

8. The computer-implemented method of claim 4, wherein evaluating the yield surface normal vector and evaluating the stress tensor value at the plurality of data points on the yield surface are performed in parallel.

9. The computer-implemented method of claim 4, further comprising:
exporting the discretized yield surface including the stress tensor value and the yield surface normal at each of the plurality of data points for further use.

10. The computer-implemented method of claim 1, wherein obtaining the model includes receiving experimental data related to a stress-strain relationship of a physical object to generate the yield surface.

11. A system for modeling plastic deformation of a material, the system comprising:
a yield surface discretization engine operable to construct a discretized yield surface from an input model representing a physical object, the discretized yield surface having a plurality of data points representing a yield surface of the physical object; and
a plasticity determination engine operable to determine elastic or plastic deformation of the physical object subjected to a load, the plasticity determination engine including:
a stress space converter operable to convert a calculated stress from the load into a stress space coordinate system;
a nearest neighbor determination module operable to determine a nearest neighbor point of the plurality of data points of the discretized yield surface to represent the calculated stress; and
a plastic multiplier adjustment module operable to return a plastic multiplier and an adjusted stress using the nearest neighbor point and the discretized yield surface to produce a deformed model.

12. The system of claim 11, wherein the yield surface discretization engine includes a universal yield surface receiver operable to receive experimental data, parameters for an existing plasticity model, or a combination thereof to construct the discretized yield surface.

13. The system of claim 11, wherein the yield surface discretization engine includes a numerical yield surface sampler operable to identify the plurality of data points on the yield surface to construct the discretized yield surface.

14. The system of claim 13, wherein the yield surface discretization engine further includes a discretized yield surface construction module operable to sample a stress tensor and normal at each of the plurality of data points for storage and output as the discretized yield surface.

15. The system of claim 11, wherein the plastic multiplier adjustment module utilizes the nearest neighbor and the calculated stress to determine whether the calculated stress is within the discretized yield surface or externally located.

16. The system of claim 15, wherein the plastic multiplier adjustment module utilizes an iterative algorithm to return an externally located stress to the discretized yield surface as the adjusted stress while adjusting the plastic multiplier.

17. A computer-implemented method comprising the steps of:
obtaining a model representing a physical object;
constructing a discretized yield surface from a received input, the discretized yield surface having a plurality of data points representing a yield surface of the physical object, each data point corresponding to a point in a stress space and associated with a yield surface normal vector precomputed for the discretized yield surface;
calculating a stress at an integration point of the model to simulate the physical object under a load;
comparing a coordinate of the stress in the stress space with one or more neighboring data points of the discretized yield surface; and
selecting a neighboring data point with a closest coordinate to the stress in the stress space as a representative data point;
determining that a magnitude of the stress at the integration point of the model exceeds the stress tensor value of the discretized yield surface at the representative data point; and
adjusting the stress according to a normal vector associated with the representative data point to simulate plastic deformation of the physical object under the load.

18. The method of claim 17, wherein adjusting the stress includes:
accessing the yield surface normal vector from the discretized yield surface at the neighboring data point;
incrementally adjusting the magnitude of the stress at the integration point of the model towards the stress tensor value of the discretized yield surface using the yield surface normal vector; and
incrementally adjusting a plastic multiplier in response to incrementally adjusting the magnitude of the stress.

19. The method of claim 17, wherein the received universal input includes experimental data related to a stress-strain relationship of a physical object to generate a traditional yield surface.

20. The method of claim 17, wherein constructing the discretized yield surface includes:
evaluating the yield surface normal vector and a stress tensor value at the plurality of data points on the yield surface of the physical object; and
storing the stress tensor value and the yield surface normal vector at each of the plurality of data points on the yield surface.
